# NEUE EUROPÄISCHE PATENTSCHRIFT

(11) **EP 0 184 064 B2**
(45) Veröffentlichungstag und Bekanntmachung des Hinweises auf die Entscheidung über den Einspruch: **25.09.1996**
(45) Hinweis auf die Patenterteilung: 24.05.1989
(21) Anmeldenummer: 85114643.1
(22) Anmeldetag: 18.11.1985
(51) Int. Cl.: G21C 3/32, G21C 3/34

(54) **Kernreaktorbrennelement**
Nuclear reactor fuel element
Elément de combustible pour réacteur nucléaire

(30) Priorität: 30.11.1984 DE 3443861
(43) Veröffentlichungstag der Anmeldung: 11.06.1986
(73) Patentinhaber: SIEMENS AKTIENGESELLSCHAFT, 80333 München (DE)
(72) Erfinder: Steven, Josef, D-8524 Neunkirchen/Brand (DE); Hassfurther, Karl, D-8600 Bamberg (DE)

(56) Entgegenhaltungen:
- FR-A- 2 365 861
- FR-A- 2 416 529
- FR-A- 2 495 369
- FR-E- 91 358
- US-A- 3 820 226

## Beschreibung

Die Erfindung betrifft ein Kernreaktorbrennelement mit zueinander parallelen Stäben, insbesondere Kernbrennstoff enthaltenden Brennstäben, und mit einem im Grundriß rechteckigen, gitterförmigen Abstandhalter mit jeweils von einem Stab durchgriffenen Gittermaschen, wobei der Abstandhalter den Stäben flach zugewandte Stege quer zu den Stäben aufweist und an einer Außenecke einer Eckgittermasche eine von zwei Außenstegen gebildete, nach außen gewölbte Rundung um eine zur Längsrichtung der Stäbe parallele Richtung aufweist.

Ein derartiges Kernreaktorbrennelement ist aus der franzosischen Zusatz-Patentschrift FR. E 91 358 bekannt. Dieses bekannte Kernreaktorbrennelement ist insbesondere für einen Siedewasserkernreaktor bestimmt. Es ist ein sogenannter Hüllkasten aus Blech vorgesehen, der über das Kernreaktorbrennelement mit den Abstandhaltern geschoben wird und der mit zwei Querstreifen aus Blech innen an den Ecken seines Oberendes auf zwei Stehbolzen an der Oberseite einer zum Brennelementkopf gehorenden Gitterplatte ruht. Die Querstreifen aus Blech sind jeweils mit einer sie durchgreifenden Schraube an den Stehbolzen festgeschraubt.

Die Abstandhalter dieses Kernreaktorbrennelementes haben Aussenstege, deren Breite an den Rundungen an den Aussenecken der Gittermaschen verringert ist.

Beim Aufschieben des Hullkastens auf das Kernreaktorbrennelement kann sich der Querschnitt des Hüllkastens bezüglich dem Querschnitt des Kernreaktorbrennelementes etwas um die Längsachse des Hüllkastens verdrehen, so dass der Hüllkasten mit seiner Unterkante gerade an einer Aussenecke einer Eckgittermasche eines Abstandhalters aufsetzt und dort verhakt. Diese Gefahr ist insbesondere dann gegeben, wenn ein gebrauchter und daher beispielsweise um seine Langsachse etwas verdrillter Hüllkasten auf das Kernreaktorbrennelement aufgeschoben wird.

Kernreaktorbrennelementen, die fur einen Druckwasserkernreaktor bestimmt sind, sind zwar keine Hullkästen zugeordnet, im Reaktorkern eines solchen Druckwasserkernreaktors sind jedoch eine Reihe gleich ausgeführter Kernreaktorbrennelemente mit parallelen Längsachsen wie Schachbrettfelder dicht nebeneinander angeordnet. Beim Be- und Entladen des Druckwasserkernreaktors mit den einzelnen Kernreaktorbrennelementen konnen sich daher insbesondere im Reaktorkern diagonal benachbarte Kernreaktorbrennelemente auch dann mit den Aussenecken der Eckgittermaschen ihrer Abstandhalter verhaken, wenn die Abstandhalter wie bei dem bekannten, für Siedewasserkernreaktoren bestimmten Kernreaktorbrennelement ausgebildet sind. Ein solches Verhaken von diagonal benachbarten Kernreaktorbrennelementen kann zu einer Zerstörung der Aussenstege der Abstandhalter dieser Kernreaktorbrennelemente führen, so dass diese Kernreaktorbrennelemente nicht wieder in den Reaktorkern des Druckwasserkernreaktors eingesetzt werden können. Besonders neigen Kernreaktorbrennelemente zum Verhaken die sich durch Betriebsbeanspruchungen im Reaktorkern stark gekrummt haben.

Aus der JP-A-56 57986 ist ein ähnlicher Abstandhalter bekannt, bei dem aber die beiden Außenstege eine abgeschrägte Ecke bilden, an der die beiden Außenstege miteinander verschweißt sind. Die oberen Kanten der Außenstege sind im Bereich der Ecke unter Ausbildung einer Schräge nach innen gezogen. Außerdem tragen die oberen Kanten der Außenstege nach innen in den Zwischenraum zwischen die Brennstäbe geneigte Abweiserfahnen.

Nach der JP-A-55 78294 bilden die Außenstege im Bereich der Ecke eine Rundung, an deren Kanten jeweils eine nach innen zum Eckbrennstab gerichtete Abweiserfahne angebracht ist. Über die Art, wie und wo die Außenstege miteinander befestigt werden, ist nichts ausgesagt.

Der Erfindung liegt die Aufgabe zugrunde, hier Abhilfe zu schaffen und beim Aufschieben von Hullkasten auf Kernreaktorbrennelemente das Aufsetzen auf Abstandhalter bzw. beim Einsetzen von Kernreaktorbrennelementen in Reaktorkerne das Verhaken von Abstandhaltern mit Abstandhaltern benachbarter Kernreaktorbrennelemente zu verhindern.

Zur Lösung dieser Aufgabe hat ein Kernreaktorbrennelement der eingangs erwähnten Art erfindungsgemäss die Merkmale des kennzeichnenden Teiles des Patentanspruchs 1.

Die zum Stab hineingezogenen Kanten der beiden Aussenstege sichern ein verhakungsfreies Gleiten sowohl eines Hüllkastens als auch eines Abstandhalters eines in einem Reaktorkern benachbarten Kernreaktorbrennelementes.

Die beiden Außenstege besitzen also Endteile, die zusammen mit der Rundung das einteilige Winkelteil bilden, das an einem Restteil jedes dieser beiden Aussenstege an einer Stelle befestigt ist, die Abstand von der Rundung hat. Hierdurch sind Befestigungsstellen der beiden Aussenstege mit Verhakungen begünstigenden Uberlappungen an der Rundung vermieden.

Es ist vorteilhaft, wenn die beiden Aussenstege Kanten quer zu den Stäben haben, die in die Kanten einer Auskehlung an der Rundung übergehen. Diese Auskehlung kann für eine Kühlmittelströmung an der Aussenseite des die Eckgittermasche des Abstandhalters durchgreifender Stabes sorgen, die durch den Abstandhalter nicht behindert ist.

Die Erfindung und ihre Vorteile seien anhand der Zeichnung an einem Ausführungsbeispiel näher erläutert.
Fig 1 zeigt in perspektivischer Ansicht einen Ausschnitt aus einem Abstandhalter in einem erfindungsgemässen Kernreaktorbrennelement.
Fig. 2 zeigt eine Draufsicht auf den Abstandhalter in Fig. 1.
Fig 3 zeigt eine Draufsicht auf die Eckmaschen von Abstandhaltern zweier erfindungsgemässer Kernreaktorbrennelemente entsprechend den Fig. 1 und 2.
Fig. 4 zeigt einen Längsschnitt entsprechend der strichpunktierten Linie IV-IV in Fig. 3.

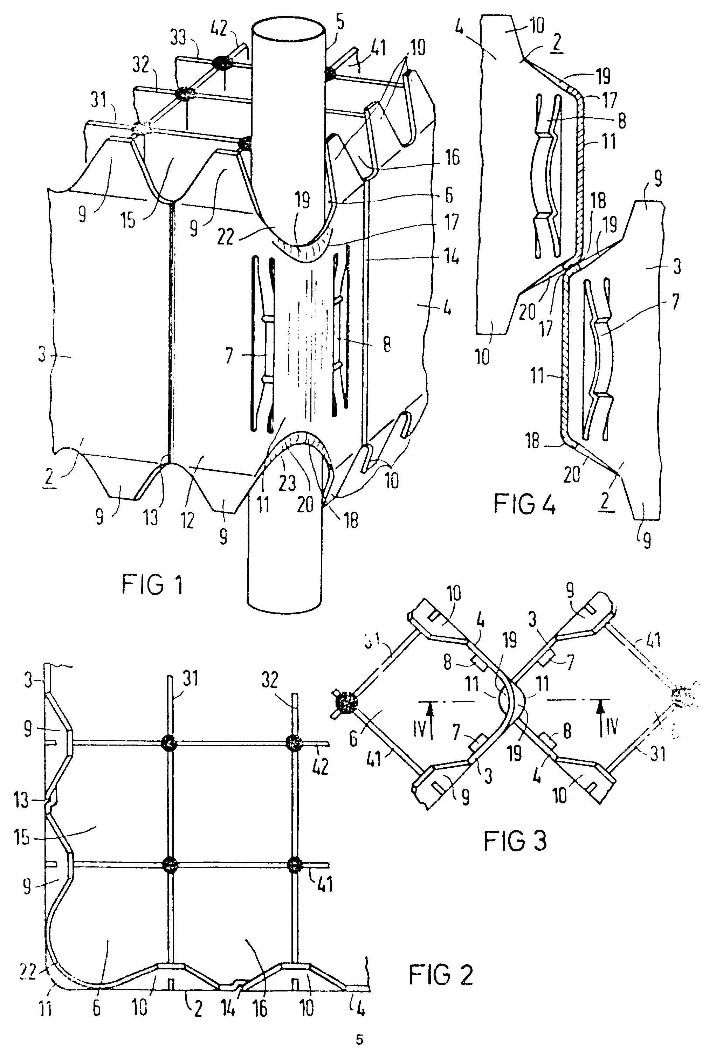

Der in den Fig. 1 und 2 dargestellte gitterformige Abstandhalter 2 ist quadratisch, besteht aus einer Nickel-Chrom-Eisen-Leglerung und gehort zu einem Kernreaktorbrennelement für einen Druckwasserkernreaktor. Es sind zwei flache, ebene Aussenstege 3 und 4 zu erkennen, die hochkant rechtwinklig zueinander stehen. Auf der Innenseite dieser Aussenstege 3 und 4 sind zum Aussensteg 3 parallele Innenstege 31 bis 33 und zum Aussensteg 4 parallele Innenstege 41 und 42 angeordnet, die sich rechtwinklig durchsetzen unter Ausbildung von quadratischen Gittermaschen, durch die jeweils ein Steuerstabführungsrohr oder ein Kernbrennstoff enthaltender Brennstab des Kernreaktorbrennelementes greift, zu denen die Innen- und Aussenstege rechtwinklig sind und denen sowohl die Aussenstege 3 und 4 als auch die Innenstege 31 bis 33 sowie 41 und 42 flach zugewandt sind. Der besseren obersicht halber ist nur ein einziger Brennstab 5 in der zwischen den beiden Aussenstegen 3 und 4 befinlichen Eckgitttermasche 6 des Abstandhalters 2 dargestellt, zu dessen Langsrichtung die Seitenflächen der hochkant angeordneten Innen- und Aussenstege parallel sind. Die die anderen Gittermaschen des Abstandhalters 2 durchgreifenden Steuerstabführungsrohre und Kernbrennstoff enthaltenden Brennstäbe sind zum Brennstab 5 parallel. Jedes der Steuerstabführungsrohre ist mit einem Ende an einer nicht dargestellten Kopfplatte eines Kopfteiles und mit dem anderen Ende an einer ebenfalls nicht dargestellten Fussplatte eines Fussteiles des Kernreaktorbrennelementes lösbar z.B. mit einer Schraubverbindung befestigt. Die Steuerstabführungsrohre durchsetzen Kopf- und Fussplatte rechtwinklig. Kopf- und Fussplatte sind ebenfalls quadratisch. Die jeweils durch eine der Gittermaschen des Abstandhalters 2 greifenden Brennstäbe, die Kernbrennstoff in gasdicht verschlossenen Hüllrohren aus einer Zirkoniumlegierung enthalten, sind weder an der Kopf- noch an der Fussplatte des Kernreaktorbrennelementes befestigt, sondern sie haben zwischen, Kopf- und Fussplatte in Längsrichtung Spiel und können sich daher in Richtung ihrer Längsachse d.h. Langsrichtung des Brennelementes frei ausdehnen. Innerhalb der quadratischen Gittermaschen weisen die Innenstege 31 bis 33 und 41 bis 42 des Abstandhalters 2 nicht dargestellte Federn und feste Noppen auf, die jeweils nach innen in die Gittermaschen gerichtet sind, durch die Brennstäbe geführt sind. Diese Federn und Noppen geben diesen Brennstäben kraftschlüssigen Halt am gitterförmigen Abstandhalter 2. Dieser gitterförmige Abstandhalter 2 findet seinerseits formschlüssigen Halt an durch einzeine Gittermaschen geführten Steuerstabführungsrohren. Am Winkelteil ist jeweils eine in die Eckgittermasche 6 des Abstandhalters gerichtete Feder 7 und 8 erkennbar, die einen kraftschlüssigen Halt des Brennstabes 5 am Abstandhalter 2 bewirkt. An den zu den zueinander parallelen Steuerstabführungsrohren und Brennstäben im Abstandhalter 2 rechtwinkligen Kanten weisen die Aussenstege 3 und 4 leicht nach innen geneigte Abweiserfahnen 9 und 10 auf.

Der Abstandhalter 2 weist an der Aussenecke der zwischen den Aussenstegen 3 und 4 befindlichen Eckgittermasche 6 eine von diesen beiden Aussenstegen 3 und 4 gebildete Viertelkreisrundung 11 nach aussen auf mit überall gleichem Krümmungsradius um die gleiche zur Längsrichtung der Steuerstabführungsrohre und der Brennstäbe im Abstandhalter 2 parallele Richtungsachse.

Das die Rundung 11 tragende einteilige Winkelteil 12, ist am gestreckten Restteil jedes der beinen Aussenstege 3 und 4 an einer Stelle 13 bzw. 14 befestigt. Diese Stellen 13 und 14 befinden sich an zu der Eckgittermasche 6 benachbarten Aussengittermaschen 15 und 16 und haben so Abstand von der Rundung 11. Die Stellen 13 und 14 sind langgestreckt und parallel zur Längsrichtung der Steuerstabführungsrohre und der Brennstäbe im Abstandhalter 2. An diesen Stellen 13 und 14 überlappt sich das Winkelteil 12 mit der zu den Aussenstegen 3 bzw. 4 gehörenden gestreckten Restteilen, mit denen dieses Winkelteil 12 an den Stellen 13 und 14 verschweisst ist.

Die zur Längsrichtung der Steuerstabführungsrohre 5 und der Brennstäbe im Abstandhalter 2 rechtwinkligen Kanten der Aussenstege 3 und 4 erstrecken sich von den Restteilen über das Winkelteil bis zur Rundung, wo sie unter Bildung einer Auskehlung in die Kanten 17, 18 der Rundung übergehen. An diesen Kanten 17 und 18 der Auskehlung 22 bzw. 23 an der Rundung 11 ist das Winkelteil 12 nach innen zum die Eckgittermasche 6 durchgreifenden Brennstab 5 hineingezogen und bilden so an diesen Kanten 17 und 18 jeweils eine Schräge 19 bzw. 20. Diese Schräge 19 bzw. 20 verläuft in Längsrichtung des Brennstabes 5 hin zu dem Ende des Brennstabes 5, das sich auf der Querschnittseite des Abstandhalters befindet, auf der sich auch die Kante 17 bzw. 18 mit der Abschrägung 19 bzw. 20 befindet.

Die Abstandhalter 2 zweier in einem Reaktorkern im Sinne von Schachbrettfeldern diagonal nebeneinander angeordneten, zueinander parallelen Kernreaktorbrennelemente liegen mit der Rundung 11 bei einer Relativbewegung der Kernreaktorbrennelemente in ihrer Längsrichtung zunächst mit ihrer Rundung 11 aussen am Brennstab 5 des jeweils diagonal benachbarten Kernreaktorbrennelementes an. Schliesslich treffen im Verlauf dieser Relativbewegung die beiden Abstandhalter 2 der benachbarten Kernreaktorbrennelemente aneinander, und die Schräge 20 des Abstandhalters 2 des einen Kernreaktorbrennelementes kann an der Schräge 19 des Abstandhalters 2 des anderen Kernreaktorbrennelementes ohne Verhaken an Kanten der Aussenstege der Abstandhalter 2 abgleiten bis schliesslich die Rundungen 11 der Abstandhalter 2 der beiden Kernreaktorbrennelemente nebeneinander liegen und sich berühren.

Durch die Schrägen 19 und 20 des Abstandhalters 2 nach den Fig. 1 bis 4 wird nicht nur ein Verhaken von benachbarten Kernreaktorbrennelementen beim Beladen eines Druckwasserkernreaktors vermieden, sondern es wird auch die Aussenecke der zwischen der Aussenstegen 3 und 4 befindlichen Eckgittermasche 6 versteift.

## Patentansprüche

1. Kernreaktorbrennelement mit zueinander parallelen Stäben (5), insbesondere Kernbrennstoff enthaltenden Brennstäben, und mit einem im Grundriß rechteckigen, gitterförmigen Abstandhalter (2) mit jeweils von einem Stab (5) durchgriffenen Gittermaschen, wobei der Abstandhalter (2) den Stäben (5) flach zugewandte Stege quer zu den Stäben (5) aufweist und an einer Außenecke einer Eckgittermasche (6) eine zwei Außenstegen (3; 4) verbindende, nach außen gewölbte Rundung (11) um eine zur Längsrichtung der Stäbe (5) parallele Richtung aufweist und wobei ferner ein die Rundung aufweisendes, einteiliges Winkelteil (12) jeweils an einer Stelle (13, 14) jedes Außensteges, die Abstand von der Rundung hat, an einem Restteil des Außensteges befestigt ist und quer zu den Stäben verlaufende Kanten (17, 18) besitzt, die im Bereich der Rundung nach innen zum die Eckgittermasche (6) durchgreifenden Stab (5) hin unter Ausbildung einer sich in Längsrichtung dieses Stabes (5) erstreckenden Schräge (19; 20) hineingezogen sind.

2. Brennelement nach Anspruch 1, **dadurch gekennzeichnet,** daß die beiden Außenstege (3, 4) im Bereich des Winkelteils (12) Kanten quer zu den Stäben (5) haben, die unter Bildung einer Auskehlung in die Kanten (17, 18) an der Rundung (11) übergehen.

3. Brennelement nach Anspruch 1 oder 2, **dadurch gekennzeichnet,** daß das Winkelteil (12) an die Restteile der Außenstege (3, 4) angeschweißt ist und daß die Außenstege zu beiden Seiten der Schweißstelle nach innen in die Zwischenräume zwischen den Brennstäben geneigte Abweiserfahnen (9, 10) aufweisen.

4. Brennelement nach einem der Ansprüche 1 bis 3, **dadurch gekennzeichnet,** daß die von Brennstäben durchgriffenen Gittermaschen Federn und Noppen zum kraftschlüssigen Halten der Brennstäbe aufweisen, wobei jede Feder (7, 8) einer Eckmasche am Winkelteil gehalten ist.

## Claims

1. Nuclear reactor fuel element having rods (5) which are parallel to each other, in particular fuel rods containing nuclear fuel, and having a latticed spacer (2), rectangular in outline, with grid meshes respectively penetrated by a rod (5), wherein the spacer (2) has webs flatly facing the rods (5) and at right angles to the rods (5), and, at an outer corner of a corner grid mesh (6), has an outwardly curved curve (11), connecting two outer webs (3; 4) and curved in a direction parallel to the longitudinal direction of the rods (5), and wherein, furthermore, a one-part angle portion (12), which presents the curve, is secured to a remainder part of the outer web at a respective point (13, 14) of each outer web that is at a distance from the curve, and has edges (17, 18) which extend transversely relative to the rods and are drawn inwards in the region of the curve towards the rod (5), which penetrates the corner grid mesh (6), with formation of a bevel (19; 20) extending in the longitudinal direction of this rod (5).

2. Fuel element according to claim 1, characterised in that in the region of the angle portion (12) the two outer webs (3, 4) have, transversely to the rods (5), edges which pass over into the edges (17, 18) on the curve (11) with formation of a channel.

3. Fuel element according to claim 1 or 2, characterised in that the angle portion (12) is welded onto the remainder parts of the outer webs (3, 4) and in that on both sides of the welding point the outer webs have deflector vanes (9, 10) which are inclined inwards into the interspaces between the fuel rods.

4. Fuel element according to one of the claims 1 to 3, characterised in that the grid meshes, which are penetrated by fuel rods, have springs and protuberances to hold the fuel rods in a force-locking manner, with each spring (7, 8) of a corner mesh being held on the angle portion.

## Revendications

1. Assemblage combustible de réacteur nucléaire comprenant des crayons (5) parallèles, notamment des crayons combustibles contenant du combustible nucléaire, et une grille d'entretoisement (2) rectangulaire en vue en plan, un crayon (5) étant enfilé dans chaque maille de la grille, la grille d'entretoisement (2) comportant, transversalement aux crayons, des bandes tournées à plat vers les crayons (5) et, à un sommet extérieur d'une maille sommitale de la grille (6) un arrondi (11), convexe vers l'extérieur et formé de deux bandes extérieures (3 ; 4), autour d'une direction parallèle à la direction longitudinale des crayons (5), un partie d'angle (12), d'une seule pièce et ayant l'arrondi, étant en outre en un point (13, 14) de chaque bande extérieure à distance de l'arrondi, fixée à une partie restante de la bande extérieure et ayant des bords (17, 18) qui s'étendent transversalement aux crayons et qui sont dans la zone de l'arrondi en renfoncement vers l'intérieur vers le crayon (5) enfilé dans la maille sommitale (6) de la grille, en constituant un biseau (19, 20) s'étendant dans la direction longitudinale de ce crayon (5).

2. Assemblage combustible de réacteur nucléaire suivant la revendication 1, caractérisé en ce que les deux bandes extérieures (3, 4) ont, dans la zone de la pièce d'angle (12), des bords qui sont transversaux aux crayons (5) et qui se transforment, avec formation d'une gorge, en les bords (17, 18) sur l'arrondi (11).

3. Assemblage combustible de réacteur nucléaire suivant la revendication 1 ou 2, caractérisé en ce que la pièce d'angle (12) est soudée aux parties restantes des bandes extérieures (3, 4) et en ce que les bandes extérieures ont de part et d'autre du point de soudure des pattes de butée (9, 10) inclinées vers l'intérieur dans les intervalles entre les crayons combustibles.

4. Assemblage combustible de réacteur nucléaire suivant l'une des revendications 1 à 3, caractérisé en ce que les mailles de la grille, dans lesquelles passent des crayons combustibles, comportant des ressorts et des bossages pour maintenir positivement les crayons combustibles, chaque ressort (7, 8) d'une maille sommitale étant maintenu sur la pièce d'angle.
